# EUROPÄISCHE PATENTSCHRIFT

(11) **EP 3 787 768 B1**
(45) Veröffentlichungstag und Bekanntmachung des Hinweises auf die Patenterteilung: **21.06.2023**
(21) Anmeldenummer: 19742354.4
(22) Anmeldetag: 18.07.2019
(51) Int. Cl.: B01D 25/12, B01D 35/143, G01F 15/06, G01F 15/061, G01F 15/12

(54) **DURCHFLUSS-ANZEIGE AN MEMBRANPLATTEN IN FILTERPRESSEN**
FLOW INDICATOR ON MEMBRANE PLATES IN FILTER PRESSES
INDICATEUR DE DÉBIT AU NIVEAU DE PLAQUES À MEMBRANE DANS DES FILTRE-PRESSE

(30) Priorität: 18.07.2018 DE 202018104129 U
(43) Veröffentlichungstag der Anmeldung: 10.03.2021
(73) Patentinhaber: JZ Engineering GmbH, 87647 Oberthingau (DE)
(72) Erfinder: ZELLER, Johann, 87647 Oberthingau (DE)
(74) Vertreter: Feller, Frank
(86) Internationale Anmeldenummer: PCT/EP2019/069359
(87) Internationale Veröffentlichungsnummer: WO 2020/016355

(56) Entgegenhaltungen:
- EP-A1- 1 084 742
- EP-A2- 1 018 355
- CN-U- 204 193 645
- DE-B- 1 025 638
- JP-A- H09 155 112
- US-A1- 2006 118 470
- US-A1- 2015 316 474

## Beschreibung

Die vorliegende Erfindung betrifft eine Durchfluss-Anzeige für Filterpressen und Filtertürme mit wenigstens einer Membranfilterplatte und einer ihr zugeordneten Verbindungsleitung zum Zuführen eines Pressmediums.

Derartige Filterpressen werden unter anderem bei der Fest-Flüssig-Filtration eingesetzt, wobei die Membranfilterplatten eine effiziente Arbeitsweise der Filterpressen ermöglichen. Wenngleich die vorliegende Erfindung auch bereits in Konfigurationen mit lediglich einer einzelnen derartigen Membranfilterplatte einsetzbar wäre, die in eine Filterpresse eingebaut ist, so sind in momentan eingesetzten Filterpressen doch in der Regel 20 bis 200 Membranfilterplatten hintereinander angeordnet. Derartige Anordnungen von hintereinander verbauten Membranfilterplatten zusammen mit Kopf- und Endplatten sowie gegebenenfalls weiteren verbauten Platten und Komponenten werden häufig als Plattenpakete bezeichnet.

Die Membranfilterplatten selbst sind Filterplatten mit relativ starren Innenteilen, die an jeder Seite mit einer flexiblen Membran versehen sind. Ebenfalls können die Membranfilterplatten Filterplatten mit relativ starren Trägerteilen sein, die entweder auf einer Seite oder beidseitig mit einer flexiblen Membran versehen sind. Die Membranen selbst können hierbei entweder einzeln austauschbar sein oder auch mit dem Innenteil bzw. Trägerteil fest verbunden sein. Im Betrieb einer solchen Filterpresse und insbesondere beim Verfahrensschritt des Nachpressens wird ein Pressmedium zwischen das starre Innenteil bzw. Trägerteil und die flexiblen Membranen eingebracht, wodurch die Membranen von dem Innenteil bzw. Trägerteil abgedrückt werden und ein Auspressen eines Filterkuchens in der Kuchenkammer zwischen zwei benachbarten Filterplatten bewirken. Je nach Anwendungsfall kann es sich bei dem Nachpressmedium um Luft oder ein anderes Gas oder auch um flüssige Medien wie Wasser, Speiseöl oder andere geeignete Flüssigkeiten handeln. Durch die einer Membranfilterplatte zugeordnete Verbindungsleitung wird das Pressmedium in die einzelnen Membranfilterplatten hineingeleitet.

Bei den Membranen der Membranfilterplatten handelt es sich um Verschleißteile, die nach einer gewissen Arbeitsdauer oder einer gewissen Anzahl von Verfahrenszyklen undicht werden können. Wenn dieser Fall einer undichten Membran eintritt, kann das Nachpressmedium in den Innenbereich der Filterpresse entweichen. Um daraufhin einen Austausch der defekten Membran vornehmen zu können, muss diese in der Filterpresse zunächst einmal aufgefunden werden, was bei der oben beschriebenen hohen Anzahl von hintereinander eingebauten Filterplatten in einer Filterpresse zeitaufwändig sein kann, insbesondere da die eigentliche Leckstelle meist im Innenbereich der Platten liegen wird.

Um den Vorgang des Auffindens einer defekten Membran beschleunigen zu können, ist es in Filterpressen aus dem Stand der Technik bekannt, an allen Verbindungsleitungen von einer zentralen Sammelleitung zu den einzelnen Membranplatten sogenannte Durchfluss-Anzeigen vorzusehen. Durch diese Durchfluss-Anzeigen wird es möglich, bei Leckagen im Plattenpaket die betroffene Membranplatte aufzufinden und zuzuordnen. Das Funktionsprinzip dieser Durchfluss-Anzeigen beruht darauf, dass während bei maximalem Hub der einzelnen Membranen bei intakten Membranen keine weitere Nachförderung von Nachpressmedium in die Presskammern mehr stattfindet, bei defekten Membranen hingegen immer noch eine Strömung in der Zuleitung vorliegt. Üblicherweise werden zum Zweck dieses Überwachens des Strömens von Pressmedium bisher Durchfluss-Anzeigen mit einem Sichtfenster eingesetzt, durch die hindurch optisch eine Bewegung eines von der Strömung des Nachpressmediums angetriebenen mechanischen Bauteils beobachtet werden kann, beispielsweise von rotierenden Schaufelblättern. Somit bildet das mit dem Medium direkt in Kontakt stehende Element solcher Durchfluss-Anzeigen auch unmittelbar das eigentliche Anzeigeelement.

Derartige Durchfluss-Anzeigen haben folglich den Nachteil, dass sie aufgrund des direkten Kontakts zwischen Pressmedium, Anzeigeelement und Sichtfenster im Laufe der Zeit intransparent ("blind") werden und somit nach einer gewissen Zeit nur noch schlecht kontrolliert werden können. Weiterhin sind die mechanischen Elemente der Anzeigen dem vollen Arbeitsdruck ausgesetzt, d.h. dass hohe Drücke in der Größenordnung von 16 bar auf die Anzeige des Geräts wirken, so dass sie dementsprechend widerstandsfähig und aufwendig ausgelegt werden müssen, was zu einer Kostensteigerung führt.

Weitere Durchfluss-Anzeigen für Filterpressen mit einer Durchfluss-Erfassungseinheit sind in EP 1 084 742 A1, US 2006/118470 A1 und JP H09 155112 A offenbart.

Es ist somit die Aufgabe der vorliegenden Erfindung, eine verbesserte Durchfluss-Anzeige für Filterpressen mit wenigstens einer Membranfilterplatte und einer ihr zugeordneten Verbindungsleitung zum Zuführen eines Pressmediums bereitzustellen, durch die ein effizienter und dauerhafter Betrieb gewährleistet werden kann und mit der eine zuverlässige Überwachung der einzelnen Membranen sichergestellt werden kann.

Hierzu umfasst die erfindungsgemäße Durchfluss-Anzeige wenigstens eine Durchfluss-Erfassungseinheit, welche einer der Verbindungsleitungen oder einer der Membranplatten zugeordnet und dazu eingerichtet ist, einen Durchfluss des Pressmediums zu erfassen und diesen Durchfluss repräsentierende Signale auszugeben, eine betriebsmäßig mit der Durchfluss-Erfassungseinheit gekoppelte Signal-Sendeeinheit, die dazu eingerichtet ist, die ausgegebenen Signale zu erhalten und auszusenden, und eine Signal-Empfangseinheit, welche dazu eingerichtet ist, die von der Signal-Sendeeinheit ausgesendeten Signale zu empfangen, wobei ein einzelnes Gehäuse vorgesehen ist, in welchem die Durchfluss-Erfassungseinheit, die Signal-Sendeeinheit und die Signal-Empfangseinheit, sowie ferner eine Anzeigeeinheit aufgenommen sind. Hierbei kann es sich um eine "entfernte" Signal-Empfangseinheit handeln, so dass eine vorbestimmte räumliche Trennung zwischen der Sendeeinheit und der Empfangseinheit vorgesehen ist, die jedoch auch sehr klein sein kann, so dass die beiden Einheiten erfindungsgemäß in einem einzelnen Gehäuse angeordnet sein können. Es ist lediglich gefordert, dass die mit dem Pressmedium in Kontakt stehende Durchfluss-Erfassungseinheit nicht mehr gleichzeitig ebenfalls als Anzeigeelement fungiert, sondern dass durch das Senden und Empfangen von Signalen eine funktionale Trennung dieser Aspekte stattfindet.

So könnte einerseits beispielsweise die Signal-Empfangseinheit in einer Messwarte angeordnet sein, so dass von dort aus umgehend der Austausch einer defekten Membranplatte organisiert werden kann. Sollten bei der Filtration demnach Dämpfe, Gase oder schädliche Flüssigkeiten austreten, so dann durch diese Maßnahme ferner der Aufenthalt von Mitarbeitern im Gefahrenbereich minimiert werden. Andererseits könnte jedoch auch bereits über eine magnetische Kopplung innerhalb eines einzelnen Gehäuses eine mit dem Pressmedium in Kontakt stehende Durchfluss-Erfassungseinheit mit einer Signal-Empfangseinheit gekoppelt sein, wobei dann ein der Durchfluss-Erfassungseinheit zugeordneter Magnet als Signal-Sendeeinheit dienen könnte, dessen Rotation von einer geeigneten Induktionsspule oder einem Gegenmagneten als Signal-Empfangseinheit aufgenommen werden könnte. Somit könnte auch eine mechanische Anzeigeeinheit im selben Gehäuse vorgesehen werden, wodurch die bereits bekannte optische Inspektion weiterhin durchgeführt werden könnte, jedoch ohne die Gefahr des Eintrübens eines Sichtfensters.

Indem in dieser Weise bei beiden der eben beschriebenen Bauformen keine direkte Anzeige des Durchflusses von Pressmedium über sich bewegende und optisch zu beobachtende mechanische Teile mehr notwendig ist und somit das Pressmedium nicht mehr im Bereich von empfindlichen Komponenten vorliegt, kann es zu keiner Beeinträchtigung der Durchfluss-Anzeige im Laufe der Zeit kommen. Durch diese angesprochene Entkopplung kann eine erfindungsgemäße Durchfluss-Anzeige auch für Druckbereiche von über 30 bar des Pressmediums eingesetzt werden, und/oder es können unterschiedliche Werkstoffe oder Wanddicken für die Durchflussanzeigen verwendet werden.

Wenngleich verschiedene Ansätze denkbar sind, wie mit den von der Signal-Sendeeinheit empfangenen Signalen umgegangen werden soll, so kann die erfindungsgemäße Durchfluss-Anzeige beispielsweise ferner eine Signal-Verarbeitungseinheit umfassen, welche betriebsmäßig mit der Signal-Empfangseinheit gekoppelt und dazu eingerichtet ist, die empfangenen Signale zu verarbeiten.

In ähnlicher Weise könnte die erfindungsgemäße Durchfluss-Anzeige auch eine Signal-Verarbeitungseinheit umfassen, welche zwischen der Durchfluss-Erfassungseinheit und der Signal-Sendeeinheit angeordnet und dazu eingerichtet ist, die ausgegebenen Signale vor ihrem Versenden zu verarbeiten.

In diesem Zusammenhang könnte daran gedacht werden, die derart zur Verfügung gestellten verarbeiteten Signale in einem übergeordneten System weiter zu verwenden, beispielsweise in einer Steueranlage der Filterpresse, die im Fall eines Feststellens einer beschädigten Membran die gesamte Presse stilllegen könnte. Es könnte jedoch auch lediglich eine Ausgabeeinheit vorgesehen werden, die dazu eingerichtet ist, den erfassten Durchfluss repräsentierende Daten auszugeben, beispielsweise an einer Anzeige, wie einem Bildschirm.

Diese den erfassten Durchfluss repräsentierenden Daten könnten unmittelbar aus den von der Signal-Empfangseinheit empfangenen Signalen abgeleitet werden, beispielsweise indem bei einer Überschreitung einer maximal zulässigen Strömungsrate eine entsprechende Information über die zugehörige Membran ausgegeben wird, oder auch nach beliebig komplexen Verarbeitungsschritten durch die Signal-Verarbeitungseinheit. Wenngleich in diesem Zusammenhang der Erfindungsgedanke bereits eine Durchfluss-Anzeige umfasst, in der lediglich das Vorliegen eines Durchflusses von Pressmedium durch die Verbindungsleitung oder eine Abwesenheit davon anzeigt, beispielsweise anhand eines Überschreitens der bereits angesprochenen maximalen Strömungsrate, so kann zur besseren Auswertung die Durchfluss-Erfassungseinheit dazu eingerichtet sein, einen Wert der Strömungsrate und/oder eine Strömungsmenge des Pressmediums über einen vorbestimmten Zeitraum zu erfassen. Somit kann mit der vorliegenden Erfindung auch beurteilt werden, welchen Nachpressfaktor die entsprechende Membran absolviert hat, bzw. wieviel Filtrat aus einer Kammer der Membranplatte gepresst worden ist.

Wenngleich die Signal-Sendeeinheit und die Signal-Empfangseinheit in beliebiger Weise miteinander gekoppelt sein können, so kann es zur Einsparung von Bauraum vorteilhaft sein, wenn die beiden Einheiten zu einer drahtlosen Signalübertragung eingerichtet sind, beispielsweise über eine Funk- oder Bluetooth-Verbindung, es könnte jedoch selbstverständlich auch an eine kabelgebundene Signalübertragung gedacht werden.

In dem Fall, in dem die wenigstens eine Durchfluss-Erfassungseinheit einer der Membranplatten zugeordnet ist, kann sie darin insbesondere in einer Umlenkbohrung derselben angeordnet sein.

Gemäß einem zweiten Aspekt betrifft die vorliegende Erfindung eine Filterpresse mit wenigstens einer Membranfilterplatte in wenigstens einer Verbindungsleitung zum Zuführen eines Pressmediums, welche ferner wenigstens eine erfindungsgemäße Durchfluss-Anzeige umfasst. Wie bereits angesprochen, kann eine derartige Filterpresse eine Mehrzahl von Membranfilterplatten umfassen, insbesondere zwischen 20 und 200 Stück, wobei in diesem Fall manchen oder jeder der Membranfilterplatten oder einer ihr zugeordneten Verbindungsleitung eine jeweilige erfindungsgemäße Durchfluss-Anzeige zugeordnet sein kann.

Um im Fall des Einsatzes einer Mehrzahl von Membranfilterplatten in einer einzelnen Filterpresse Synergieeffekte hinsichtlich der Signalbehandlung nutzen zu können, können sich mehrere aus der Mehrzahl von Membranfilterplatten eine einzelne Signal-Empfangseinheit teilen, welche dazu eingerichtet ist, an sämtlichen der Signal-Sendeinheiten der mehreren Membranfilterplatten ausgesendete Signale zu empfangen.

Um in einer Filterpresse eine Mehrzahl von Membranfilterplatten mit Pressmedium versorgen zu können, kann diese ferner eine Sammelleitung zur Versorgung der mehreren Membranfilterplatten umfassen, von welcher die jeweiligen Versorgungsleitungen der mehreren Membranfilterplatten abzweigen. Diese Sammelleitung kann sich außerhalb des Plattenpaketes befinden oder auch innerhalb des Plattenpaketes in Form einer sogenannten Zentral-Nachpressleitung geführt sein.

Weitere Vorteile und Merkmale der vorliegenden Erfindung werden aus der nachfolgenden Beschreibung zweier Ausführungsformen deutlich, wenn diese zusammen mit den beiliegenden Zeichnungen betrachtet wird. Diese zeigen im Einzelnen:
- Figur 1: eine erste Ausführungsform einer nicht erfindungsgemäßen Filterpresse mit einer außerhalb des Plattenpakets befindlichen Sammelleitung in einer Explosionsansicht;
- Figur 2: eine Variante der ersten nicht erfindungsgemäßen Ausführungsform mit einer innerhalb des Plattenpaketes geführten Zentral-Nachpressleitung, ebenfalls in einer Explosionsdarstellung;
- Figur 3: eine zweite Ausführungsform einer erfindungsgemäßen Filterpresse mit einer außerhalb des Plattenpakets befindlichen Sammelleitung in einer Explosionsansicht; und
- Figur 4: eine Variante der zweiten Ausführungsform mit einer innerhalb des Plattenpaketes geführten Zentral-Nachpressleitung, ebenfalls in einer Explosionsdarstellung.

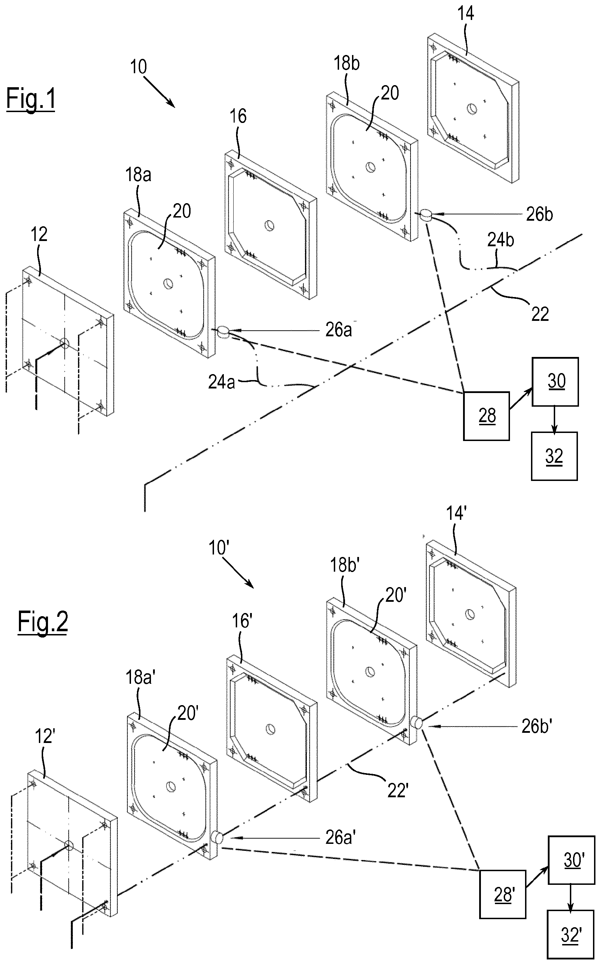

Die Figuren 1 und 2 zeigen jeweils in ähnlicher Weise eine erste Ausführungsform einer nicht erfindungsgemäßen Filterpresse und eine leicht abgewandelte Variante davon in Explosionsansichten, wobei die Filterpresse aus Figur 1 mit dem Bezugszeichen 10 bezeichnet ist, während die Filterpresse aus Figur 2 mit dem Bezugszeichen 10' bezeichnet ist. Ferner sind auch die Bezugszeichen weiterer identischer oder ähnlicher Komponenten in Figur 2 jeweils mit einem Hochkomma versehen, wobei aus Gründen der Redundanz auf die explizite Beschreibung dieser Teile teilweise verzichtet wird.

Die Filterpressen umfassen jeweils eine Kopfplatte 12, 12' und eine Endplatte 14, 14', zwischen welchen eine Kammerplatte 16, 16' und zwei Membranplatten 18a, 18b bzw. 18a', 18b' vorgesehen sind. Die beiden Membranplatten 18a, 18b bzw. 18a', 18b' weisen jeweils zentrale Membranen 20, 20' auf, die ihrerseits eine vorbestimmte Flexibilität aufweisen, und unter Druckeinwirkung durch elastische Verformung einen Druck auf einen in der Filterpresse 10, 10' aufgenommenen Filterkuchen ausüben können, um eine Fest-Flüssig-Filtration durchzuführen.

Zur Herstellung dieses Drucks können die Membranplatten 18a, 18b bzw. 18a', 18b' über eine zentrale Sammelleitung 22, 22' mit einem gasförmigen oder flüssigen Pressmedium versorgt werden. Hierbei ist in der Ausführungsform aus Figur 1 die Sammelleitung 22 außerhalb der Filterpresse 10 angeordnet, während in der Ausführungsform aus Figur 2 die Sammelleitung 22' innerhalb des Plattenpakets der Filterpresse 10' geführt ist. Dementsprechend zweigen in der Ausführungsform aus Figur 1 von der Sammelleitung 22 zwei Verbindungsleitungen 24a und 24b jeweils zu der ersten Membranplatte 18a bzw. der zweiten Membranplatte 18b ab, während innerhalb der Membranplatten 18a' und 18b' der Filterpresse 10' Umlenkbohrungen zum Abzweigen des Pressmediums aus der Sammelleitung 22' vorgesehen sind.

Werden nun die einzelnen Membranplatten 18a, 18b bzw. 18a', 18b' mit Pressmedium versorgt, so strömt dieses zunächst einmal durch die Sammelleitung 22 oder 22' und ggf. die Verbindungsleitung 24a und 24b, bis die Membranen 20, 20' ihren maximalen Hubweg zurückgelegt haben, woraufhin das Nachströmen von Druckmedium endet. Sollte jedoch eine der Membranen 20, 20' einen Riss oder eine andere Beschädigung aufweisen, so würde das Nachströmen von Pressmedium nicht enden, sondern dieses weiter strömen und sich im auszupressenden Presskuchen verteilen.

In einem solchen Fall müsste die entsprechende Membranplatte 18a, 18b bzw. 18a', 18b' ausgetauscht werden. Um hierfür feststellen zu können, in welcher der Membranplatten 18a, 18b bzw. 18a', 18b' eine Beschädigung vorliegt, sind diesen Membranplatten 18a', 18b' bzw. ihren Zuleitungen 24a, 24b Durchfluss-Erfassungseinheiten 26a, 26b bzw. 26a', 26b' zugeordnet, welche einen Durchfluss von Pressmedium qualitativ oder quantitativ erfassen und diesen Durchfluss repräsentierende Signale ausgeben können.

Ferner sind den Durchfluss-Erfassungseinheiten 26a, 26b bzw. 26a', 26b' nicht dargestellte Signal-Sendeeinheiten zugeordnet, die dazu eingerichtet sind, die ausgegebenen Signale über eine Funkverbindung auszusenden. Die derart ausgesendeten Funksignale können von einer gemeinsamen entfernten zentralen Signal-Empfangseinheit 28, 28' empfangen und von einer lediglich schematisch dargestellten Signal-Verarbeitungseinheit 30, 30' weiter verarbeitet werden, die wiederum eine Ausgabeeinheit 32, 32' umfasst, welche dazu eingerichtet ist, an einer Anzeige anzuzeigen, welche der Membranplatten 18a, 18b bzw. 18a', 18b' beschädigt ist und zu ersetzen ist.

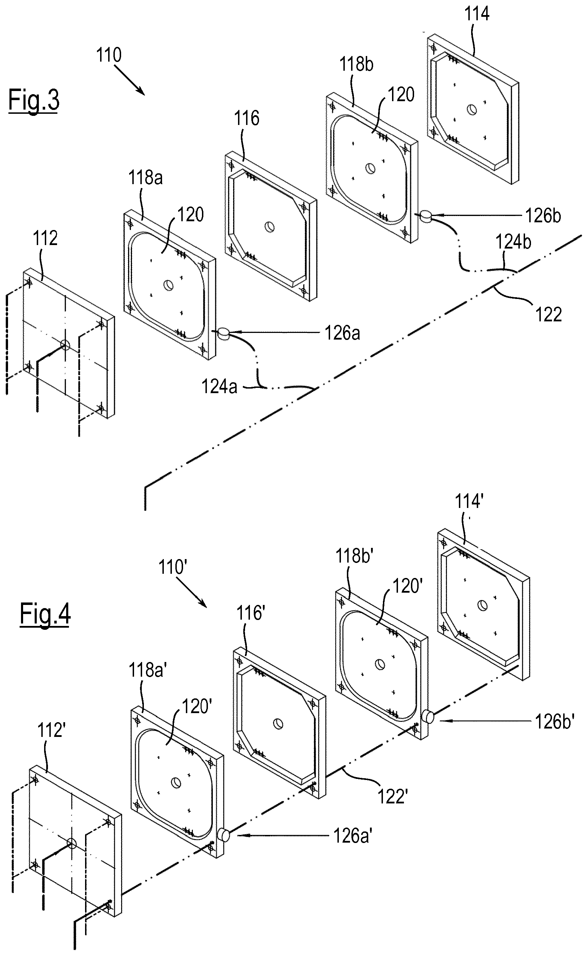

Die Figuren 3 und 4 zeigen schließlich in analoger Weise eine zweite Ausführungsform einer erfindungsgemäßen Filterpresse und eine leicht abgewandelte Variante davon in Explosionsansichten, wobei die Filterpresse aus Figur 3 mit dem Bezugszeichen 110 bezeichnet ist, während die Filterpresse aus Figur 4 mit dem Bezugszeichen 110' bezeichnet ist. In gleicher Weise sind die Bezugszeichen von weiteren Komponenten in den Figuren 3 und 4, die denjenigen aus den Figuren 1 und 2 entsprechen jeweils lediglich um 100 erhöht.

Die Filterpressen aus den Figuren 3 und 4 unterscheiden sich von denjenigen aus den Figuren 1 und 2 lediglich dadurch, dass die Durchfluss-Erfassungseinheiten in einzelnen Gehäusen 126a, 126b bzw. 126a', 126b' zusammen mit einer jeweiligen Signal-Sendeeinheit, Signal-Empfangseinheit und Anzeigeeinheit aufgenommen sind. Hierbei ist jeweils lediglich die Durchfluss-Erfassungseinheit in Kontakt mit dem Pressmedium und ein der Durchfluss-Erfassungseinheit zugeordneter Magnet dient als Signal-Sendeeinheit. Dessen Rotation wird von einem im selben Gehäuse aufgenommenen, jedoch von dem Pressmedium hermetisch abgeschirmten Gegenmagneten aufgenommen, der als Signal-Empfangseinheit dient und der wiederum ein mechanisches Rädchen antreibt, dessen Rotation von einem Bediener beobachtet werden kann und das somit als Anzeigeeinheit dient.

## Patentansprüche

1. Durchflussanzeige für Filterpressen (10; 10') mit wenigstens einer Membranfilterplatte (18a, 18b; 18a', 18b') und einer ihr zugeordneten Verbindungsleitung (22', 24a, 24b) zum Zuführen eines Pressmediums, umfassend:
- wenigstens eine Durchfluss-Erfassungseinheit (26a, 26b; 26a', 26b'), welche einer der Verbindungsleitungen (24a, 24b) oder einer der Membranplatten (18a', 18b') zugeordnet und dazu eingerichtet ist, einen Durchfluss des Pressmediums zu erfassen und diesen Durchfluss repräsentierende Signale auszugeben;
- eine betriebsmäßig mit der Durchfluss-Erfassungseinheit (26a, 26b; 26a', 26b') gekoppelte Signal-Sendeeinheit, welche dazu eingerichtet ist, die ausgegebenen Signale zu erhalten und auszusenden; und
- eine Signal-Empfangseinheit (28; 28'), welche dazu eingerichtet ist, die von der Signal-Sendeeinheit ausgesendeten Signale zu empfangen,
**dadurch gekennzeichnet, dass** ein einzelnes Gehäuse (126a, 126b; 126a', 126b') vorgesehen ist, in welchem die Durchfluss-Erfassungseinheit, die Signal-Sendeeinheit und die Signal-Empfangseinheit, sowie ferner eine Anzeigeeinheit aufgenommen sind.

2. Durchflussanzeige nach Anspruch 1, ferner umfassend eine Signal-Verarbeitungseinheit (30; 30'), welche betriebsmäßig mit der Signal-Empfangseinheit gekoppelt und dazu eingerichtet ist, die empfangenen Signale zu verarbeiten.

3. Durchflussanzeige nach Anspruch 1, ferner umfassend eine Signal-Verarbeitungseinheit, welche zwischen der Durchfluss-Erfassungseinheit (26a, 26b; 26a', 26b') und der Signal-Sendeeinheit angeordnet und eingerichtet ist, die ausgegebenen Signale vor ihrem Versenden zu verarbeiten.

4. Durchflussanzeige nach einem der Ansprüche 1 bis 3, ferner umfassend eine Ausgabeeinheit (32; 32'), welche dazu eingerichtet ist, den erfassten Durchfluss repräsentierende Daten auszugeben, beispielsweise an einer Anzeige.

5. Durchflussanzeige nach einem der vorhergehenden Ansprüche, wobei die Durchfluss-Erfassungseinheit (26a, 26b; 26a', 26b') dazu eingerichtet ist, eine Strömungsrate und/oder eine Strömungsmenge des Pressmediums zu erfassen.

6. Durchflussanzeige nach einem der vorhergehenden Ansprüche, wobei die Signal-Sendeeinheit und die Signal-Empfangseinheit (28; 28') zu einer drahtlosen Signalübertragung eingerichtet sind, beispielsweise über eine Funk- oder Bluetooth-Verbindung.

7. Durchflussanzeige nach einem der vorhergehenden Ansprüche, wobei die wenigstens eine Durchfluss-Erfassungseinheit (26a', 26b') einer der Membranplatten (18a', 18b') zugeordnet und darin in einer Umlenkbohrung angeordnet ist.

8. Filterpresse mit wenigstens einer Membranfilterplatte (18a, 18b; 18a', 18b') und wenigstens einer Verbindungsleitung (22'; 24a, 24b) zum Zuführen eines Pressmediums, ferner umfassend wenigstens eine Durchflussanzeige nach einem der vorhergehenden Ansprüche.

9. Filterpresse nach Anspruch 8, umfassend eine Mehrzahl von Membranfilterplatten (18a, 18b; 18a', 18b'), wobei jeder der Membranfilterplatten (18a', 18b') oder einer ihr zugeordneten Verbindungsleitung (24a, 24b) eine jeweilige Durchflussanzeige nach einem der Ansprüche 1 bis 7 zugeordnet ist.

10. Filterpresse nach Anspruch 9, wobei mehrere aus der Mehrzahl von Membranfilterplatten (18a, 18b; 18a', 18b') sich eine einzelne Signal-Empfangseinheit (28, 28') teilen, welche dazu eingerichtet ist, von sämtlichen der Signal-Sendeeinheiten der mehreren Membranfilterplatten (18a, 18b; 18a', 18b') ausgesendeten Signale zu empfangen.

11. Filterpresse nach einem der Ansprüche 8 bis 10, ferner umfassend eine Sammelleitung (22; 22') zur Versorgung mehrerer Membranfilterplatten (18a, 18b; 18a', 18b'), von welcher die jeweiligen Verbindungsleitungen (24a, 24b) der mehreren Membranfilterplatten abzweigen.

## Claims

1. Flow indicator for filter presses (10; 10') having at least one membrane filter plate (18a, 18b; 18a', 18b') and connecting line (22', 24a, 24b) associated therewith for supplying a pressing medium, comprising:
- at least one flow detection unit (26a, 26b; 26a', 26b') which is associated with one of the connecting lines (24a, 24b) or one of the membrane plates (18a', 18b') and is designed to detect a flow of the pressing medium and to output signals representing this flow;
- a signal transmitting unit which is operatively coupled to the flow detection unit (26a, 26b; 26a', 26b') and is designed to receive and transmit the output signals; and
- a signal receiving unit (28; 28') which is designed to receive the signals transmitted by the signal transmitting unit, **characterized in that** a single housing (126a, 126b; 126a', 126b') is provided, in which the flow detection unit, the signal transmitting unit and the signal receiving unit, and also a display unit are accommodated.

2. Flow indicator according to claim 1, further comprising a signal processing unit (30; 30') which is operatively coupled to the signal receiving unit and is designed to process the received signals.

3. Flow indicator according to claim 1, further comprising a signal processing unit which is arranged between the flow detection unit (26a, 26b; 26a', 26b') and the signal transmitting unit and is designed to process the output signals prior to their transmission.

4. Flow indicator according to any of claims 1 to 3, further comprising an output unit (32; 32') which is designed to output data representing the detected flow, for example on a display.

5. Flow indicator according to any of the preceding claims, wherein the flow detection unit (26a, 26b; 26a', 26b') is designed to detect a flow rate and/or a flow quantity of the pressing medium.

6. Flow indicator according to any of the preceding claims, wherein the signal transmitting unit and the signal receiving unit (28; 28') are designed for wireless signal transmission, for example via a radio or Bluetooth connection.

7. Flow indicator according to any of the preceding claims, wherein the at least one flow detection unit (26a', 26b') is associated with one of the membrane plates (18a', 18b') and is arranged therein in a deflection bore.

8. Filter press, comprising at least one membrane filter plate (18a, 18b; 18a', 18b') and at least one connecting line (22'; 24a, 24b) for supplying a pressing medium, further comprising at least one flow indicator according to any of the preceding claims.

9. Filter press according to claim 8, comprising a plurality of membrane filter plates (18a, 18b; 18a', 18b'), wherein a flow indicator according to any of claims 1 to 7 is associated with each of the membrane filter plates (18a', 18b') or a connecting line (24a, 24b) associated therewith in each case.

10. Filter press according to claim 9, wherein a plurality of the plurality of membrane filter plates (18a, 18b; 18a', 18b') share a single signal receiving unit (28, 28') which is designed to receive signals transmitted from all of the signal transmitting units of the plurality of membrane filter plates (18a, 18b; 18a', 18b').

11. Filter press according to any of claims 8 to 10, further comprising a manifold (22; 22') for supplying a plurality of membrane filter plates (18a, 18b; 18a', 18b'), from which manifold each of the connecting lines (24a, 24b) of the plurality of membrane filter plates branch off.

## Revendications

1. Indicateur de débit pour filtre-presse (10 ; 10') avec au moins une plaque filtrante à membrane (18a, 18b ; 18a', 18b') et une conduite de liaison (22', 24a, 24b) qui lui est associée pour l'amenée d'un milieu de pressage, comprenant :
- au moins une unité de détection de débit (26a, 26b ; 26a', 26b'), qui est associée à l'une des conduites de liaison (24a, 24b) ou à l'une des plaques à membrane (18a', 18b') et qui est conçue pour détecter un débit du fluide de pressage et pour émettre des signaux représentant ce débit ;
- une unité d'émission de signaux couplée fonctionnellement à l'unité de détection de débit (26a, 26b ; 26a', 26b'), qui est agencée pour recevoir et émettre les signaux émis ; et
- une unité de réception de signaux (28 ; 28') qui est adaptée pour recevoir les signaux émis par l'unité d'émission de signaux,
**caractérisé en ce qu'**il est prévu un seul boîtier (126a, 126b ; 126a', 126b') dans lequel sont logés l'unité de détection de débit, l'unité d'émission de signaux et l'unité de réception de signaux, ainsi qu'en outre une unité d'affichage.

2. Indicateur de débit selon la revendication 1, comprenant en outre une unité de traitement de signaux (30 ; 30') accouplée fonctionnellement à l'unité de réception de signaux et agencée pour traiter les signaux reçus.

3. Indicateur de débit selon la revendication 1, comprenant en outre une unité de traitement de signaux disposée entre l'unité de détection de débit (26a, 26b ; 26a', 26b') et l'unité d'émission de signaux et agencée pour traiter les signaux émis avant leur envoi.

4. Indicateur de débit selon l'une quelconque des revendications 1 à 3, comprenant en outre une unité de sortie (32 ; 32') agencée pour délivrer des données représentatives du débit détecté, par exemple sur un afficheur.

5. Indicateur de débit selon l'une quelconque des revendications précédentes, dans lequel l'unité de détection de débit (26a, 26b ; 26a', 26b') est agencée pour détecter un débit et/ou une quantité d'écoulement du fluide de pressage.

6. Indicateur de débit selon l'une quelconque des revendications précédentes, dans lequel l'unité d'émission de signaux et l'unité de réception de signaux (28 ; 28') sont configurées pour une transmission de signal sans fil, par exemple via une connexion radio ou Bluetooth.

7. Indicateur de débit selon l'une des revendications précédentes, dans lequel ledit au moins une unité de détection de débit (26a', 26b') est associée à l'une des plaques à membrane (18a', 18b') et est disposée à l'intérieur d'un alésage de déviation.

8. Filtre-presse comprenant au moins une plaque filtrante à membrane (18a, 18b ; 18a', 18b') et au moins une conduite de liaison (22' ; 24a, 24b) pour l'amenée d'un fluide de pressage, comprenant en outre au moins un indicateur de débit selon l'une des revendications précédentes.

9. Filtre-presse selon la revendication 8, comprenant une pluralité de plaques filtrantes à membrane (18a, 18b ; 18a', 18b'), un indicateur de débit respectif selon l'une des revendications 1 à 7 étant associé à chacune des plaques filtrantes à membrane (18a', 18b') ou à une conduite de liaison (24a, 24b) qui lui est associée.

10. Filtre-presse selon la revendication 9, dans lequel plusieurs plaques filtrantes à membrane (18a, 18b ; 18a', 18b') parmi la pluralité de plaques filtrantes à membrane partagent une unique unité de réception de signaux (28, 28') agencée pour recevoir des signaux émis par l'ensemble des unités d'émission de signaux de la pluralité de plaques filtrantes à membrane (18a, 18b ; 18a', 18b').

11. Filtre-presse selon l'une quelconque des revendications 8 à 10, comprenant en outre un collecteur (22 ; 22') pour l'alimentation d'une pluralité de plaques filtrantes à membrane (18a, 18b ; 18a', 18b'), duquel partent les lignes de connexion respectives (24a, 24b) de la pluralité de plaques filtrantes à membrane.
